# EUROPÄISCHE PATENTSCHRIFT

(11) **EP 4 229 262 B1**
(45) Veröffentlichungstag und Bekanntmachung des Hinweises auf die Patenterteilung: **08.04.2026**
(21) Anmeldenummer: 21791311.0
(22) Anmeldetag: 11.10.2021
(51) Int. Cl.: E05D 15/06, E05D 15/10

(54) **TÜRSYSTEM MIT LINEARFÜHRUNG OHNE FÜHRUNGSSCHIENE**
DOOR SYSTEM WITH LINEAR GUIDE WITHOUT GUIDE RAIL
SYSTEME DE PORTE AVEC GUIDE LINÉAIRE SANS RAIL DE GUIDAGE

(30) Priorität: 16.10.2020 DE 202020105924 U
(43) Veröffentlichungstag der Anmeldung: 23.08.2023
(73) Patentinhaber: Bode - Die Tür GmbH, 34123 Kassel (DE)
(72) Erfinder: PELLEGRINI, Andreas, 34123 Kassel (DE)
(74) Vertreter: Patentanwälte Bauer Vorberg Kayser
(86) Internationale Anmeldenummer: PCT/EP2021/078061
(87) Internationale Veröffentlichungsnummer: WO 2022/078964

(56) Entgegenhaltungen:
- EP-A1- 1 619 339
- EP-A2- 1 637 684
- EP-A2- 1 914 372
- WO-A1-2007/128771
- US-A- 2 068 674
- US-A1- 2011 209 306

## Beschreibung

Die vorliegende Erfindung betrifft ein Türsystem, insbesondere ein Schiebe- oder Schwenkschiebetürsystem, für ein Fahrzeug des öffentlichen Personenverkehrs, umfassend einen Türflügel, der unter Einsatz einer Antriebseinheit aus einer ein Türportal des Fahrzeugs verschließenden Stellung in eine einen Fahrgastzustieg durch das Türportal freigebende Öffnungsstellung bewegbar ist, wobei der Türflügel in einer Tragführung getragen ist, die Tragführung umfassend eine Führungseinrichtung.

Unter einem "Fahrzeug" des öffentlichen Personenverkehrs können radgebundene oder schienengebundene Fahrzeuge zu verstehen sein. Bei einem radgebundenen Fahrzeug kann es sich beispielsweise um ein Busfahrzeug oder ein anderweitiges zum Personentransport vorgesehenes Transportfahrzeug handeln. Bei einem schienengebundenen Fahrzeug kann es sich um einen Zug (z.B. einen Hochgeschwindigkeitszug oder einen Regionalzug), eine Straßenbahn, eine Tram, eine S-Bahn, eine U-Bahn etc. handeln.

Die Erfindung kann sich auf einflüglige oder zweiflüglige Fahrgasttüren beziehen, wobei die Fahrgasttüren als Schiebetür oder Schwenkschiebetür ausgebildet sein können. Die nachfolgenden Ausführungen beziehen sich zur Vereinfachung auf eine mit einem Türflügel ausgestattete Fahrgasttür. Die vorliegend verwendeten, auf "einen" Türflügel bezogenen Termini und Beschreibungspassagen, schließen demnach nicht aus, dass die Erfindung auch bei zwei- oder mehrflügligen Fahrgasttüren zum Einsatz kommen kann. Unter einem "Türflügel" kann synonym auch ein "Türblatt" verstanden werden.

Führungseinrichtungen für Türsysteme sind aus dem Stand der Technik allgemein bekannt und weisen oftmals Kugelumlauflager auf, insbesondere um hochbelastbare und hochpräzise Führungen bereitzustellen.

Eine Führungseinrichtung mit Kugelumlauflager nach dem Stand der Technik umfasst eine Führungsschiene sowie einen zumindest teilweise in die Führungsschiene eingreifenden und in der Führungsschiene über ein Kugelumlauflager linearbeweglich geführten Läufer. Die dem Kugelumlauflager zugehörigen Rollkörper sind in zumindest einer Kugelreihe aufgereiht und in zumindest einer, meist in zwei Teil-Kugelführungsbahnen geführt. Die erste Teil-Kugelführungsbahn ist in dem Läufer ausgebildet und erstreckt sich entlang einer Läufer-Längsachse, die zweite Teil-Kugelführungsbahn ist durch eine an dem Läufer ausgebildete und sich entlang der Läufer-Längsachse erstreckende Läufer-Führungsnut und eine der Läufer-Führungsnut gegenüberliegende, an der Führungsschiene ausgebildete Führungsschienen-Führungsnut ausgebildet. Im Bereich eines bezogen auf die Läufer-Längsachse ersten und zweiten Läufer-Endes sind jeweils Umlenkmittel zum Umlenken der Rollkörper aus der ersten in die zweite Teil-Kugelführungsbahn und umgekehrt angeordnet.

Eine bei einer Fahrgasttür zum Einsatz kommende Führungseinrichtung mit den eingangs beschriebenen Merkmalen ist beispielsweise aus der EP 1 914 372 A2 bekannt. Die Führungsschiene ist über Nutensteine und Schrauben an einem biege- und torsionssteifen Trägerprofil befestigt, das wiederum mit dem Fahrzeug verbunden ist.

Die Herstellung einer Führungsschiene gemäß der EP 1 914 372 A2 ist relativ kostspielig, da diese, um die Belastungen aufnehmen zu können, im Ziehverfahren aus Stahl hergestellt, danach gehärtet, gerichtet und öberflächengeschützt wird. Nachteilig an einer derart ausgebildeten Führungseinrichtung ist - insbesondere bei Verwendung bei einer Fahrgasttür eines Fahrzeugs des öffentlichen Personenverkehrs - auch das aus der massiven Bauweise resultierende relativ hohe Eigengewicht sowie der relativ hohe Bauraumbedarf.

Auch die Druckschriften US 2011/0209306 A1, WO 2007/128771 A1, US 2 068 647 A, EP 1 637 684 A2 und EP 1 619 339 A1 zeigen alternative Antriebs- oder Führungseinrichtungen für Schiebe- oder Schwenkschiebetüren.

Entsprechend liegt der vorliegenden Erfindung die Aufgabe zugrunde, ein Türsystem für ein Fahrzeug des öffentlichen Personenverkehrs bereitzustellen, das mit möglichst geringem Aufwand und geringen Kosten herstellbar ist. Das Eigengewicht und der Bauraumbedarf sollen dabei möglichst gering sein.

Zur Lösung dieser Aufgabe wird ein Türsystem mit den Merkmalen des Anspruchs 1 vorgeschlagen.

Es sei darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Der Begriff Rollkörper wird im Sinne der Erfindung als Synonym für sämtliche geeigneten Körper, die auf Lagern abrollen können verwendet, insbesondere Kugeln, Rollen oder Räder.

Ein wesentlicher Aspekt der Erfindung besteht darin, dass auf die im Stand der Technik stets vorhandene Führungsschiene vollständig verzichtet wird. Der Läufer wird unmittelbar im Längsprofil geführt, welches fest mit dem Fahrzeug verbunden ist. Durch den Verzicht auf die Führungsschienen können erhebliche Kosten und auch Gewicht eingespart werden. Auch der Aufwand für die Montage und Wartung der Führungseinrichtung ist deutlich reduziert.

Die Anmelderin hat weiterhin erkannt, dass es nicht notwendig ist, das gesamte, üblicherweise aus weniger widerstandsfähigem Aluminium bestehende Längsprofil aus einem ausreichend harten und widerstandsfähigen Material zu fertigen, vielmehr reicht es aus, geeignete Lagerelemente im Längsprofil vorzusehen, auf welchen der Läufer dauerhaft und verschleißarm geführt werden kann. Die Lagerelemente sind also erfindungsgemäß aus einem härteren Material als das Längsprofil selbst gefertigt. Beispielsweise bietet es sich an, das Längsprofil selbst aus Aluminium, die Lagerelemente aber aus Stahl, vorzugsweise aus gehärtetem und oberflächenvergütetem Stahl zu fertigen.

Vorteilhafterweise weisen einander gegenüberliegende Innenseiten der Seitenwände jeweils zumindest ein Lagerelement auf, wobei sich ein Führungsbereich des Längsprofils im Querschnitt mittig in die im Querschnitt u-förmige Führungsbahn hineinerstreckt. Im Querschnitt sind somit beidseitig des Führungsbereichs zwischen den Lagerelementen und dem Führungsbereich Rollkörper angeordnet.

Die Lagerelemente sind vorteilhafterweise auf der Innenseite der U-förmigen Führungen am Längsprofil befestigt, sodass die Rollkörper die Lagerelemente kontaktieren und bei Bewegung des Läufers auf diesen abrollen. Erfindungsgemäß sind die Lagerelemente in das Längsprofil eingelassen, in entsprechenden Längsnuten, die sich entlang einer Längsachse des Längsprofils bzw. der Führungsbahn in Bewegungsrichtung das Läufers erstrecken. Von den Lagerelementen tritt im Querschnitt gesehen also nur ein Bereich gegenüber einer Innenoberfläche der Führungsbahn vor. Vorzugsweise befinden sich mehr als 50 % der eingelassenen Lagerelemente innerhalb des Bodens oder der Seitenwände der Führungsbahn.

Erfindungsgemäß werden Rundstäbe als Lagerelemente verwendet, die sich ebenfalls in Längsrichtung des Längsprofils bzw. der Führungsbahn erstrecken. Ein besonderer Vorteil besteht darin, dass Rundstäbe besonders einfach und kostengünstig herstellbar sind. Auch die Oberflächenvergütung ist verhältnismäßig einfach möglich. Es können beispielsweise zwei unmittelbar nebeneinander angeordnete und sich gegebenenfalls sogar berührende Rundstäbe vorgesehen sein, alternativ können die beiden Rundstäbe auch beabstandet voneinander angeordnet sein. In jedem Fall bilden zwei nebeneinander angeordnete Rundstäbe im Querschnitt gesehen ebenfalls eine Art konkave Vertiefung zwischen sich aus, sodass die Rollkörper auf zwei Rundstäben sicher geführt sind. Für den Fall, dass die Rundstäbe beabstandet angeordnet sind, ist der Abstand auf die Größe bzw. den Durchmesser der Rollkörper insofern abgestimmt, dass die Rollkörper trotzdem stets beide Rundstäbe kontaktieren und somit auch von beiden Rundstäben geführt werden.

Die Erfindung eignet sich für Kugelumlauflager mit Kugeln als Rollkörpern. Die einer jeweiligen Kugelreihe zugehörigen Kugeln sind dabei ebenfalls in jeweils einer sich aus einer ersten und einer zweiten Teil-Kugelführungsbahn zusammensetzenden Kugelführungsbahn geführt, wobei die ersten Teil-Kugelführungsbahnen in dem Läufer ausgebildet sind und sich in paralleler Anordnung entlang einer Läufer-Längsachse erstrecken, die zweiten Teil-Kugelführungsbahnen sind im Gegensatz zum Stand der Technik unmittelbar im Längsprofil, nämlich durch eine an dem Läufer ausgebildete und sich entlang der Läufer-Längsachse erstreckende Läufer-Führungsnut und eine der jeweiligen Läufer-Führungsnut gegenüberliegenden Innenseite der Seitenwand des Längsprofils ausgebildete Längsprofil-Führungsnut ausgebildet.

Die Erfindung bezieht sich nicht nur auf die Verwendung von Aluminium für die Herstellung des Längsträgers und gehärtetem Stahl für die Herstellung der Lagerelemente, alternativ können auch andere geeignete Materialien verwendet werden.

Nach einer weiteren vorteilhaften Ausgestaltung kann bei einer mit der Erfindung vorgeschlagenen Führungseinrichtung ein zum Tragen eines Lastelements ausgebildeter Träger vorgesehen sein, der mit dem Läufer lösbar verbunden ist. An einem solchen Träger kann ein Lastelement unmittelbar befestigt bzw. angeordnet werden. Auch kann an dem Träger ein Lastelement mittelbar befestigt werden, d.h. unter Zwischenschaltung geeigneter Verbindungs-, Trag-, oder Führungsmittel. Eine "Befestigung" schließt nicht aus, dass der Träger nebst dem "Tragen" einer Last auch Führungs- oder Lagereigenschaften aufweist. Die lösbare Verbindbarkeit des Trägers mit dem Läufer vereinfacht die Montage der Führungseinrichtung vor der Inbetriebnahme. Auch lässt sich der Träger damit einfacher austauschen, z.B. im Schadens- oder Wartungsfall.

Nach einer weiteren vorteilhaften Ausgestaltung kann bei einer mit der Erfindung vorgeschlagenen Führungseinrichtung vorgesehen sein, dass das Lastelement ein Türflügel einer Fahrgasttür, insbesondere einer Schwenkschiebetür oder Schiebetür, eines Fahrzeugs ist. Der Tragabschnitt kann dabei eine Einrichtung zur Anordnung eines Drehgelenks mit einer zur Führungsschiene parallelen Drehachse aufweisen, wobei an dem Drehgelenk eine Türflügelhalterung befestigbar ist. Die beschriebene Führungseinrichtung eignet sich also insbesondere zur Aufhängung und Führung eines einem Türsystem, z. B. Schwenkschiebe- oder Schiebetürsystem, zugehörigen Türflügels. Gleichsam eignet sich die Führungseinrichtung zur Aufhängung und Führung eines oder mehrerer (z.B. zweier) Türflügel, die Führungseinrichtung kann also bei ein- oder zweiflügligen Türsystemen eingesetzt werden.

Die Tragführung umfasst eine Führungseinrichtung. Die Tragführung bzw. Führungseinrichtung ist dabei vorzugsweise im oberen Bereich des Türportals angeordnet.

Die Erfindung wird anhand der nachfolgenden Figuren näher erläutert. Diese zeigen nicht einschränkend zu verstehende Ausführungsbeispiele der Erfindung. Es zeigen:
- Fig. 1: eine Querschnittsdarstellung einer Ausführungsvariante der Erfindung mit jeweils zwei Rundstäben als Lagerelemente je Seitenwand.
- Fig. 2: eine Querschnittsdarstellung einer weiteren Ausführungsvariante der Erfindung mit jeweils zwei Rundstäben als Lagerelemente je Seitenwand und einem Läufer mit Rollen.

Die Figuren zeigen jeweils Querschnittsdarstellungen erfindungsgemäßer Führungseinrichtungen 20. In einem Längsprofil 22 ist ein linearbeweglich geführter Läufer 24 angeordnet. Der Läufer 24 greift mit einem Führungsbereich 38 zumindest teilweise in das Längsprofil 22, das nach Art eines U-Profils ausgebildet ist. Gezeigt ist eine Längsprofil 22 mit zwei Führungsbahnen 26, wobei sich nur in der oberen Führungsbahn 26 ein Läufer 24 befindet. Selbstverständlich kann aber auch in der unteren Führungsbahn 26 ein Läufer 24 geführt sein.

Die beiden Führungsbahnen 26 weise jeweils eine Bodenfläche 28 und zwei sich davon rechtwinklig erstreckende Seitenwände 30 auf, wobei die beiden inneren Seitenwände 30 der beiden Führungsbahnen 26 im gezeigten Ausführungsbeispiel durch einen gemeinsamen Steg gebildet sind.

Die linearbewegliche Führung des Läufers 24 im Längsprofil 22 ist im gezeigten Ausführungsbeispiel durch ein Kugelumlauflager verwirklicht. Die dem Kugelumlauflager zugehörigen Rollkörper 32 sind als Kugeln ausgeführt und in zwei Kugelreihen in Kugellaufbahnen aufgereiht, wobei die einer jeweiligen Kugelreihe zugehörigen Kugeln 32 in einer Kugelführungsbahn geführt sind. Die Kugelführungsbahn setzt sich jeweils aus einer ersten Teil-Kugelführungsbahn 37 und einer zweiten Teil-Kugelführungsbahn 39 zusammen, wobei die erste Teil-Führungsbahn 37 in dem Läufer 24 ausgebildet ist und sich entlang einer Läufer-Längsachse erstreckt. Die zweite Teil-Kugellaufbahn 39 ist durch eine an dem Läufer 24 ausgebildete und sich entlang der Läufer-Längsachse erstreckende Läufer-Führungsnut 44 und eine in der der Läufer-Führungsnut 44 gegenüberliegenden Innenseite 36 einer Seitenwand 30 des Längsprofils 22 ausgebildeten Längsprofil-Führungsnut 46 gebildet. Das Kugelumlauflager ist durch ein Deckelelement 48 verschlossen.

Im Bereich eines bezogen auf die Läufer-Längsachse ersten und zweiten Läufer-Endes sind jeweils nicht gezeigte Umlenkmittel zum Umlenken der Kugeln 32 in die jeweiligen Teil-Kugelführungsbahnen 37, 39 ausgebildet.

Erfindungsgemäß bestehen die gezeigten Lagerelemente 34 aus einem härteren und widerstandsfähigeren Material als das Längsprofil 22.

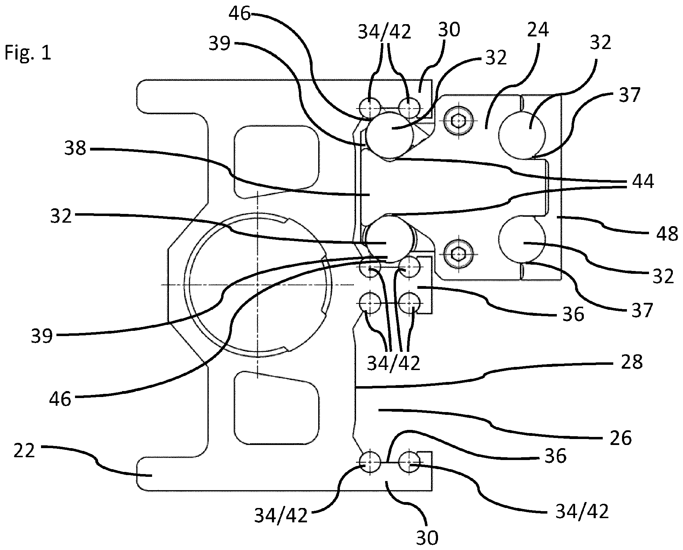

Figur 1 zeigt eine erfindungsgemäße Ausführungsvariante, bei der an den Innenseiten 36 der Seitenwände jeweils zwei sich in Längsrichtung parallel zueinander erstreckende Rundstäbe 42 als Lagerelemente 34 angeordnet sind. Die Kugeln 32 kontaktieren jeweils beide Rundstäben 42 und rollen auf diesen ab. Die Rundstäbe 42 können alternativ auch unmittelbar nebeneinanderliegend angeordnet sein. Auch die Rundstäbe 42 sind in der gezeigten Ausführungsvariante jeweils in die Seitenwände 30 eingelassen ausgeführt.

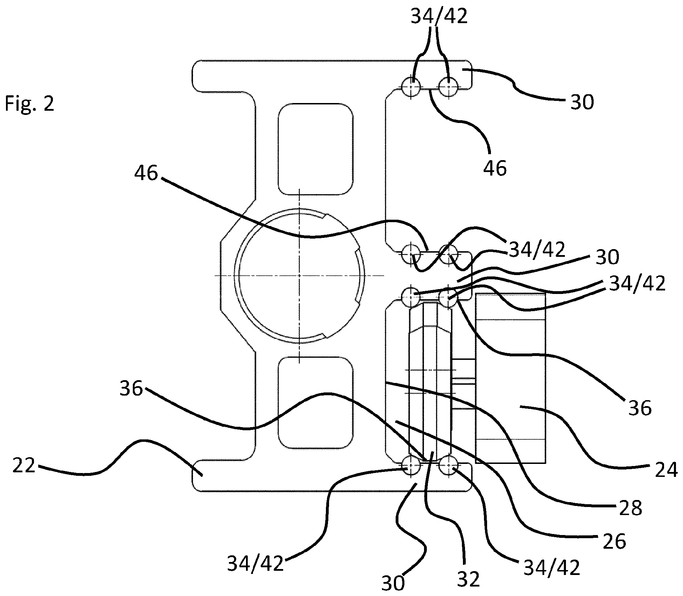

In einer in Fig. 2 gezeigten weiteren Ausführungsvariante der Erfindung sind die Rollkörper 32 als Rollen ausgeführt und am Läufer 24 drehbar gelagert, so dass auf das gezeigte Kugelumlauflager verzichtet werden kann. Im gezeigten Ausführungsbeispiel sind Rundstäbe 42 als Lagerelemente 34 vorgesehen.

Die Führungseinrichtung 20 kommt bei einem nicht dargestellten Türsystem eines Fahrzeugs (z. B. einem Fahrzeug für den öffentlichen Personenverkehr) zum Einsatz. Vornehmlich eignet sich die Führungseinrichtung zum Einsatz bei einem Schiebe- oder Schwenkschiebetürsystem. Das Türsystem umfasst einen Türflügel (gegebenenfalls auch mehrere, z.B. zwei Türflügel), der unter Einsatz einer Antriebseinheit aus einer ein Türportal des Fahrzeugs verschließenden Stellung in eine einen Fahrgastzustieg durch das Türportal freigebende Öffnungsstellung bewegbar ist, wobei der Türflügel in einer Tragführung getragen ist. Die Tragführung umfasst die genannte Führungseinrichtung. Die Tragführung bzw. Führungseinrichtung ist dabei vorzugsweise im oberen Bereich des Türportals angeordnet.

Die Erfindung ist nicht auf die gezeigten Ausführungsbeispiele beschränkt, sondern umfasst auch weitere Ausführungsvarianten, die auf Basis der Erfindung, wie in den Ansprüchen definiert, möglich sind.

### Bezugszeichenliste

20 Führungseinrichtung
22 Längsprofil
24 Läufer
26 Führungsbahn
28 Bodenfläche
30 Seitenwand
32 Rollkörper/Kugel/Rolle
34 Lagerelement
36 Innenseite
37 erste Teil-Kugelführungsbahn
38 Führungsbereich
39 zweite Teil-Kugelführungsbahn
40 Laufbahn
42 Rundstab
44 Läufer-Führungsnut
46 Längsprofil-Führungsnut
48 Deckelelement

## Patentansprüche

1. Türsystem, insbesondere Schiebe- oder Schwenkschiebetürsystem, für ein Fahrzeug des öffentlichen Personenverkehrs, umfassend
- ein Türportal,
- einen Türflügel, der unter Einsatz einer Antriebseinheit aus einer das Türportal des Fahrzeugs verschließenden Stellung in eine einen Fahrgastzustieg durch das Türportal freigebende Öffnungsstellung bewegbar ist, wobei der Türflügel in einer Tragführung getragen ist, die Tragführung umfassend eine Führungseinrichtung (20), die Führungseinrichtung (20) umfassend
- ein an dem Türportal befestigtes und aus einem ersten Material gebildetes Längsprofil (22), welches eine im Querschnitt u-förmige Führungsbahn (26) mit einer Bodenfläche (28) und zwei sich davon rechtwinklig erstreckenden Seitenwänden (30) derart aufweist, dass keine separate, zusätzliche Führungsschiene vorgesehen ist,
- einen zumindest teilweise in die Führungsbahn (26) eingreifenden und unmittelbar in der Führungsbahn (26) des Längsprofils (22) auf Rollkörpern (32) linearbeweglich gelagerten Läufer (24),
wobei
- in der Führungsbahn (26) in den einander gegenüberliegenden Innenseiten der Seitenwände (30) jeweils zumindest ein aus einem zweiten Material gebildetes Lagerelement (34) angeordnet ist, auf dem die den Läufer (24) lagernden Rollkörper (32) bei einer Linearbewegung des Läufers (24) abrollen,
- die Lagerelemente (34) durch jeweils zwei Rundstäbe (42) gebildet sind, die jeweils in eine sich entlang einer Längsachse des Längsprofils (22) erstreckende Längsnut das Längsprofils eingelassen sind und die sich entlang der Führungsbahn (26) erstrecken,
- die Rundstäbe (42) aus einem zweiten Material gefertigt sind, welches härter als das das Längsprofil (22) ausbildende erste Material ist.

2. Türsystem nach Anspruch 1, **dadurch gekennzeichnet, dass**
- sich ein Führungsbereich (38) des Längsprofils (22) im Querschnitt mittig in die im Querschnitt u-förmige Führungsbahn (26) hineinerstreckt,
- im Querschnitt beidseitig des Führungsbereichs (38) zwischen den Lagerelementen (34) und dem Führungsbereich (38) Rollkörper (32) angeordnet sind.

3. Türsystem nach Anspruch 1 oder Anspruch 2, **dadurch gekennzeichnet, dass** die Rundstäbe (42) beabstandet voneinander angeordnet sind.

4. Türsystem nach einem der Ansprüche 1 bis 3, **dadurch gekennzeichnet, dass** die Rollkörper (32) am Läufer (24) befestigt sind.

5. Türsystem nach einem der Ansprüche 1 bis 4, **dadurch gekennzeichnet, dass** der Läufer (24) über ein Kugelumlauflager linearbeweglich geführt ist, wobei die dem Kugelumlauflager zugehörigen Rollkörper (32) als Kugeln ausgeführt und in zwei Kugelreihen aufgereiht sind, wobei die einer jeweiligen Kugelreihe (12, 14) zugehörigen Kugeln (32) in einer Kugelführungsbahn geführt sind, die sich jeweils aus einer ersten Teil-Kugelführungsbahn (37) und einer zweiten Teil-Kugelführungsbahn (39) zusammensetzen, wobei die erste Teil-Kugelführungsbahn (37) in dem Läufer (24) ausgebildet ist und sich entlang einer Läufer-Längsachse erstreckt und die zweite Teil-Kugelführungsbahn (39) durch eine an dem Läufer (24) ausgebildete und sich entlang der Läufer-Längsachse erstreckende Läufer-Führungsnut (44) und eine in der der Läufer-Führungsnut (44) gegenüberliegenden Innenseite (36) der Seitenwand (30) ausgebildete Längsprofil-Führungsnut (46) ausgebildet ist, und wobei im Bereich eines bezogen auf die Läufer-Längsachse ersten und zweiten Läufer-Endes jeweils Umlenkmittel zum Umlenken der Kugeln (32) in die jeweiligen Teil-Kugelführungsbahn ausgebildet sind.

6. Türsystem nach einem der Ansprüche 1 bis 5, **dadurch gekennzeichnet, dass** das erste Material Aluminium und das zweite Material Stahl, vorzugsweise gehärteter Stahl ist.

## Claims

1. A door system, in particular sliding or swinging/sliding door system, for a public transportation vehicle, comprising
- a door portal,
- a door leaf which, by using a drive unit, can be moved from a position closing the door portal of the vehicle into an opening position enabling the entry of passengers through the door portal, wherein the door leaf is carried in a carrying guide, the carrying guide comprising a guide device (20), the guide device (20) comprising
- a longitudinal profile (22) attached to the door portal and formed from a first material, which has a guide track (26) of U-shaped cross-section with a bottom surface (28) and two side walls (30) extending at right angles therefrom in such a manner that no separate, additional guide rail is provided,
- a slider (24) engaging at least partially in the guide track (26) and mounted directly on rolling bodies (32) in a linearly movable manner in the guide track (26) of the longitudinal profile (22),
wherein
- in the guide track (26), in the opposing inner sides of the side walls (30), in each case at least one bearing element (34) formed from a second material is arranged, on which the rolling bodies (32) supporting the slider (24) roll during a linear movement of the slider (24),
- the bearing elements (34) are each formed by two round rods (42) which are each embedded in a longitudinal groove of the longitudinal profile extending along a longitudinal axis of the longitudinal profile (22), and which extend along the guide track (26),
- the round rods (42) are made of a second material which is harder than the first material forming the longitudinal profile (22).

2. The door system according to claim 1, **characterized in that**
- a guide region (38) of the longitudinal profile (22) extends in cross-section centrally into the guide track (26) which is U-shaped in cross-section,
- rolling bodies (32) are arranged in cross-section on both sides of the guide region (38) between the bearing elements (34) and the guide region (38).

3. The door system according to claim 1 or 2, **characterized in that** the round rods (42) are arranged spaced apart from each other.

4. The door system according to any one of claims 1 to 3, **characterized in that** the rolling bodies (32) are attached to the slider (24).

5. The door system according to any one of claims 1 to 4, **characterized in that**
the slider (24) is guided in a linearly movable manner via a recirculating ball bearing, wherein
the rolling bodies (32) associated with the recirculating ball bearing are designed as balls and are lined up in two rows of balls, wherein the balls (32) associated with a respective row of balls (12, 14) are guided in a ball guide track composed in each case of a first partial ball guide track (37) and a second partial ball guide track (39), wherein the first partial ball guide track (37) is formed in the slider (24) and extends along a longitudinal slider axis, and the second partial ball guide track (39) is formed by a slider guide groove (44) formed on the slider (24) and extending along the longitudinal slider axis, and a longitudinal profile guide groove (46) formed in the inner side (36) of the side wall (30) opposite the slider guide groove (44), and wherein deflection means for deflecting the balls (32) into the respective partial ball guide track are formed in the region of, in relation to the slider longitudinal axis, a first and second slider end.

6. The door system according to any one of claims 1 to 5, **characterized in that** the first material is aluminum and the second material is steel, preferably hardened steel.

## Revendications

1. Système de porte, en particulier système de porte coulissante ou coulissante pivotante pour un véhicule de transport publique, comprenant
- un portique de porte,
- un battant de porte, qui en utilisant une unité d'entraînement peut être mobile d'une position fermant le portique de porte du véhicule à une position d'ouverture libérant un accès de passagers par le portique de porte, sachant que le battant de porte est supporté dans un guidage de porte, le guidage de support comprenant un système de guidage (20), le système de guidage comprenant (20)
- un profilé longitudinal (22) fixé au portique de porte et formé d'un premier matériau, lequel comporte une piste de guidage (26) en section en forme de U avec une surface de fond (28) et deux parois latérales (30) s'étendant perpendiculairement de celle-ci de telle manière qu'aucun rail de guidage supplémentaire, séparé n'est prévu,
- un élément mobile (24) venant en prise au moins en partie dans la piste de guidage (26) et directement logé linéairement mobile dans la piste de guidage (26) du profilé longitudinal (22) sur des corps roulants (32),
sachant que
- dans la piste de guidage (26) est respectivement disposé au moins un élément de support (34) dans les côtés intérieurs opposés l'un à l'autre des parois latérales (30), formé d'un deuxième matériau, sur lequel roulent les corps roulants (32) supportant l'élément mobile (24) lors d'un mouvement linéaire de l'élément mobile (24),
- les éléments de support (34) sont formés par respectivement deux barres rondes (42), qui sont respectivement encastrées dans une rainure longitudinale du profilé longitudinal, s'étendant le long d'un axe longitudinal du profilé longitudinal (22) et qui s'étendent le long de la piste de guidage (26),
- les barres rondes (42) sont fabriquées dans un deuxième matériau, lequel est plus dur que le premier matériau constituant le profilé longitudinal (22).

2. Système de porte selon la revendication 1, **caractérisé en ce qu'**
- une zone de guidage (38) du profilé longitudinal (22) s'étend en section au centre dans la piste de guidage (26) en forme de U en section,
- **en ce que** des corps roulants (32) sont disposés en section des deux côtés de la zone de guidage (38) entre les éléments de support (34) et la zone de guidage (38).

3. Système de porte selon la revendication 1 ou la revendication 2, **caractérisé en ce que** les barres rondes (42) sont disposées à distance l'une de l'autre.

4. Système de porte selon l'une quelconque des revendications 1 à 3, **caractérisé en ce que** les corps roulants (32) sont fixés sur l'élément mobile (24).

5. Système de porte selon l'une quelconque des revendications 1 à 4, **caractérisé en ce que** l'élément mobile (24) est guidé linéairement mobile par le biais d'un palier à circulation de billes, sachant que
les corps roulants (32) appartenant au palier à circulation de billes sont exécutés sous la forme de billes et sont alignés en deux rangées de billes, sachant que les billes (32) appartenant à une rangée de billes (12, 14) respective sont guidées dans une piste de guidage de billes, qui se compose respectivement d'une première partie de piste de guidage de billes (37) et d'une deuxième partie de piste de guidage de billes (39), sachant que la première partie de piste de guidage de billes (37) est constituée dans l'élément mobile (24) et s'étend le long d'un axe longitudinal d'élément mobile et la deuxième piste de guidage de billes partielle (39) est constituée par une rainure de guidage d'élément mobile (44) constituée sur l'élément mobile (24) et s'étendant le long de l'axe longitudinal d'élément mobile et une rainure de guidage de profilé longitudinal (46) est constituée dans le côté intérieur (36) opposé à la rainure de guidage d'élément mobile (44) de la paroi latérale (30), et sachant que dans la zone d'une première et d'une deuxième extrémité par rapport à l'axe longitudinal d'élément mobile des moyens de renvoi sont constitués pour renvoyer les billes (32) dans la partie de piste de guidage de billes respective.

6. Système de porte selon l'une quelconque des revendications 1 à 5, **caractérisé en ce que** le premier matériau est de l'aluminium et le deuxième matériau de l'acier, de préférence de l'acier trempé.
